# EUROPÄISCHE PATENTSCHRIFT

(11) **EP 3 078 270 B1**
(45) Veröffentlichungstag und Bekanntmachung des Hinweises auf die Patenterteilung: **29.07.2020**
(21) Anmeldenummer: 16162995.1
(22) Anmeldetag: 30.03.2016
(51) Int. Cl.: A21C 3/02

(54) **VORRICHTUNG ZUM KONTINUIERLICHEN GEFALTETEN ABLEGEN VON TEIG AUF EINEM FÖRDERMITTEL**
DEVICE FOR CONTINUOUS FOLDED DEPOSITION OF DOUGH ON A CONVEYOR
DISPOSITIF DE DEPOT CONTINU DE PATE REPLIEE SUR UN MOYEN DE TRANSPORT

(30) Priorität: 08.04.2015 DE 102015004279
(43) Veröffentlichungstag der Anmeldung: 12.10.2016
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- EP-A1- 2 647 289
- EP-B1- 2 460 410
- US-A- 4 004 035

## Beschreibung

Die Erfindung betrifft eine Vorrichtung zum kontinuierlichen gefalteten Ablegen von Teig auf einem Fördermittel, wobei eine Teigzuführeinrichtung zum Zuführen des Teiges aus einem Teigvorrat zu einer Ablegeeinrichtung vorgesehen ist. Eine derartige Vorrichtung ist aus US4004035 und aus EP2460410A1 bekannt.

Eine bekannte Ablegeeinrichtung umfasst ein paar voneinander beabstandete Förderbänder zum Befördern des Teiges, das an seinem stromaufwärtigen Ende verschwenkbar gelagert ist. Das untere Ende der Ablegeeinrichtung ist hin- und herbewegbar angetrieben, sodass eine im Spalt zwischen den Förderbändern nach unten bewegte Teigbahn in Lagen übereinander auf einem als Förderband ausgebildeten Fördermittel abgelegt werden kann. Die Zuführeinrichtung legt den Teig auf einem Förderbandabschnitt auf, der stromaufwärts vom Spalt der Ablegeeinrichtung angeordnet ist.

Die bekannten Vorrichtungen mit den vorbezeichneten Merkmalen haben sich insofern als problematisch erwiesen, als es im Übergangsbereich zwischen dem Förderbandabschnitt stromaufwärts vom Spalt der Ablegeeinrichtung und der Ablegeeinrichtung selbst zu Übergabeproblemen kommen kann. Teigabschnitte können insbesondere im Übergabebereich kleben bleiben oder Verstopfungen verursachen, was zu einem Stillstand der gesamten Vorrichtung führen kann. Darüber hinaus ist es erforderlich, den Übergabebereich relativ häufig zu reinigen.

Aus DE 26 32 802 C2 ist es zudem bekannt, dass der oberhalb des Spaltes der Ablegeeinrichtung angeordnete Förderbandabschnitt, auf welchem Teig von der Zuführeinrichtung zur Ablegeeinrichtung transportiert wird, und eines der Förderbänder der Ablegeeinrichtung selbst durch ein gemeinsames, durchgehendes Förderband gebildet werden. Mit anderen Worten wird der Teig auf einem Förderbandabschnitt abgelegt und von diesem, weil dieser auch in die Ablegeeinrichtung hinein und durch diese hindurchreicht, ohne Übergabe auf ein weiteres Förderband durch die Ablegeeinrichtung hindurch geführt, wobei die dem durchgehenden gemeinsamen Förderband gegenüberliegende Seite des Teiges von dem anderen Förderband des Förderbandpaares der Ablegeeinrichtung beaufschlagt wird. Eine Übergabe des Teiges von einem Förderbandabschnitt, der den Teig der Ablegeeinheit zuführt, auf einen anderen Förderbandabschnitt, der durch die Ablegeeinheit reicht, ist damit nicht mehr erforderlich. Die Teigführung wird insbesondere in dem sich hin und her und auf und nieder bewegenden Einführungsspalt, im Weiteren abgekürzt als Spalt bezeichnet, der Ablegeeinrichtung beruhigt, wodurch insgesamt eine Erhöhung der Durchsatzrate möglich ist. Spalte und Fugen, die durch Teigreste verstopfen oder verschmutzen können, werden vermieden oder zumindest reduziert.

Die bekannte Vorrichtung umfasst sonach lediglich zwei Förderbänder, nämlich ein hierin auch als "gemeinsames durchgehendes Förderband" bezeichnetes erstes Förderband und ein zweites Förderband. Die der Vorrichtung zugehörige Ablegeeinrichtung ist durch zwei Förderbänder bzw. zwei Förderbandabschnitte in paralleler Anordnung gebildet, zwischen welchen sich ein Spalt erstreckt. Neben dem zweiten Förderband bildet das erste Förderband dabei mit einem Förderbandabschnitt gleichermaßen ein Förderband bzw. einen Förderbandabschnitt der Ablegeeinrichtung. Demzufolge sind der oberhalb des Spaltes der Ablegeeinrichtung angeordnete Förderbandabschnitt und ein Förderband bzw. Förderbandabschnitt der Ablegeeinrichtung durch das gemeinsame durchgehende Förderband gebildet.

Die Führung des gemeinsamen durchgehenden Förderbandes im Schwenkbereich der Ablegeeinrichtung erfolgt zweckmäßig über zwei, insbesondere parallele bezüglich ihrer jeweiligen Rollenmittelachsen, Rollen. Dabei beaufschlagt eine erste Rolle die Unterseite des Förderbandes, d. h. die Seite, die vom Teig nicht beaufschlagt wird und eine zweite, insbesondere parallele bezüglich ihrer jeweiligen Rollenmittelachsen, Rolle, die Oberseite des Förderbandes, d. h. die Seite des Förderbandes die vom Teig beaufschlagt wird, aber von unten. Durch diese Anordnung wird im sich relativ schnell bewegenden Schwenklagenbereich der Ablegeeinrichtung eine definierte und exakte Bandführung sichergestellt.

Der Erfindung liegt die Aufgabe zugrunde, eine Vorrichtung mit den Merkmalen des Oberbegriffes des Anspruches 1 derart weiter zu bilden, dass sie weniger störanfällig ist und mit einer erhöhten Durchsatzrate betrieben werden kann. Insbesondere soll das Ablegen des gefalteten Teiges auf einem Abführförderband verbessert werden.

Erfindungsgemäß ist wenigstens ein einen Dreh- bzw. Schwerpunkt für die Vorrichtung relativ zu dem unter einem Fördermittel bildendes Dreh- bzw. Schwenkelement vorgesehen. Ein entsprechendes Dreh- bzw. Schwenkelement bildet zusätzlich zu dem Schwenklagerbereich der Ablegeeinrichtung einen weiteren Dreh- bzw. Schwenklagerbereich. Bei dem Dreh- bzw. Schwenkelement kann es sich z. B. um ein Dreh- bzw. Schwenklager. handeln. Die Vorrichtung ist dabei um den durch das Dreh- bzw. Schwenkelement gebildeten Dreh- bzw. Schwenkpunkt relativ zu dem oder einem Fördermittel dreh- bzw. schwenkbar gelagert. Derart ist auf konstruktiv vergleichsweise einfache Weise eine Dreh- bzw. Schwenkbarkeit der gesamten Vorrichtung, d. h. insbesondere der Teigzuführeinrichtung, der Förderbandabschnitte des gemeinsamen durchgehenden Förderbands sowie der Ablegeeinrichtung, relativ zu dem, wie sich im Weiteren ergibt, typischerweise als Abführförderband ausgebildeten, Fördermittel realisiert.

Das den Dreh- bzw. Schwenkpunkt bildende Dreh- bzw. Schwenkelement ist zweckmäßig stromaufwärts, insbesondere in einem Bereich des gemeinsamen durchgehenden Förderbandes, in welchem Teig von der Teigzuführeinrichtung auf das gemeinsame durchgehende Förderbandes aufgelegt wird, von dem oder einem Schwenklagerbereich der Ablegeeinrichtung angeordnet. Durch die Anordnung des Dreh- bzw. Schwenkelements stromaufwärts der Ablegeeinrichtung, d. h. insbesondere in einem Bereich des gemeinsamen durchgehenden Förderbandes, in welchem der Teig von der Teigzuführeinrichtung auf das gemeinsame durchgehende Förderbandes aufgelegt wird, können z. B. durch Höhenverlagerungen des auf das Förderband aufgelegten Teiges bedingte "Beunruhigungen" des Teiges reduziert bzw. vermieden und die Förderung des Teiges sonach beruhigt werden. Vorrichtungsseitig kann zudem auf weitere mit den Förderbändern, z. B. zum Zwecke einer bestimmten Umlenkung, Wölbung etc., eines Förderbandabschnitts, zusammenwirkende Umlenkrollen verzichtet werden, was sich positiv auf die Laufeigenschaften bzw. das Laufverhalten jeweiliger Förderbänder auswirkt.

Das stromabwärtige Ende der Ablegeeinrichtung wird äquidistant über dem Fördermittel verschwenkbar geführt, wobei das Fördermittel ein Abführförderband ist, das in an sich bekannter Weise im Wesentlichen rechtwinkelig zur Schwenkrichtung der Ablegeeinrichtung angetrieben ist.

In Weiterbildung der Erfindung kann es vorgesehen sein, dass stromaufwärts von dem Schwenkbereich der Ablegeeinrichtung ein weiteres Rollenpaar angeordnet ist, wobei eine erste Rolle dieses Rollenpaares das gemeinsame durchgehende Förderband auf seiner Unterseite und eine zweite, insbesondere parallele bezüglich ihrer jeweiligen Rollenmittelachsen, Rolle das gemeinsame durchgehende Förderband an seiner Oberseite beaufschlagt. Der Abstand der Rollen im Schwenkbereich der Ablegeeinrichtung und stromaufwärts vom Schwenkbereich der Ablegeeinrichtung ist derart gewählt, dass der auf der Oberseite beaufschlagte Förderbandabschnitt durch einen Spalt zwischen den beiden Rollen eines jeden Rollenpaares hindurchführbar ist. Mit anderen Worten liegen die Rollen der Rollenpaare sehr nahe beieinander.

Das zweite Förderband der Ablegeeinrichtung ist zweckmäßig derart angeordnet, dass über das gemeinsame durchgehende Förderband zu einem Einlaufende des Spaltes geförderter Teig gegen einen nach oben überstehenden Abschnitt des anderen Förderbandes geführt ist. Dadurch wird sichergestellt, dass das auf dem durchgehenden Förderband herangeführte Teiggut sicher und ohne Teigverlust in den Spalt der Ablegeeinrichtung hineinläuft.

Die Ablegeeinrichtung ist zweckmäßig in einem Schwenklager verschwenkbar gehalten. Dieses Schwenklager ist nach oben und unten bewegbar gelagert, sodass das stromabwärtige Ende der Ablegeeinrichtung horizontal z. B. in Horizontalführungsmitteln, d. h. z. B. Schienen, die quer über dem Abführförderband verlaufen können, geführt werden kann. Die Anordnung des anderen Förderbandes der Ablegeeinrichtung ist so gewählt, dass die stromaufwärtige Rolle dieses anderen Förderbandes auf einer Kreisbahn oder kreisähnlichen Bahn um die Schwenkachse der Ablegeeinrichtung geführt wird. Nachdem die Schwenkachse sich beim Betrieb der Ablegeeinrichtung hebt und senkt, wird die Achse der stromaufwärtigen Rolle im Raum kreis- oder ellipsenähnlich geführt.

In Weiterbildung der Erfindung ist es vorteilhaft, dass bei einem vertikal angeordneten Spalt der Ablegeeinrichtung, d. h. in einer mittleren Ablegeposition der Ablegeeinrichtung, der auf dem gemeinsamen Förderband dem stromaufwärtigen Ende des Spaltes zugeführte Teig im Wesentlichen rechtwinkelig auf die Oberfläche des anderen Förderbandes trifft.

Die Zuführung des Teiges auf das gemeinsame durchgehende Förderband erfolgt typischerweise zwischen dem bzw. einem entsprechenden einen Dreh- bzw. Schwenkpunkt für die Vorrichtung relativ zu dem oder einem Fördermittel bildenden Dreh- bzw. Schwenkelement und einem stromaufwärts nachfolgenden Rollenpaar.

Die Zuführvorrichtung kann z. B. als Teigbandformer ausgebildet sein oder wenigstens einen solchen umfassen, wobei auch andere Zuführeinrichtungen im Rahmen der Erfindung funktionieren können. Darüber hinaus wird zweckmäßig vorgesehen, dass ein stromaufwärts angeordneter Abschnitt des gemeinsamen Förderbandes vor dem Zuführabschnitt des Teiges in den Spalt mit einem Trennmittel, z. B. mit Mehl, versehen werden kann, auch der auf dem gemeinsamen Förderband bereits abgelegte und in Richtung zur Ablegeeinrichtung transportierte Teig wird auf seiner Oberseite bemehlt oder in sonstiger Weise mit einem geeigneten Trennmittel versehen.

Die Erfindung ist anhand von Ausführungsbeispielen in den Zeichnungsfiguren näher erläutert. Diese zeigen:

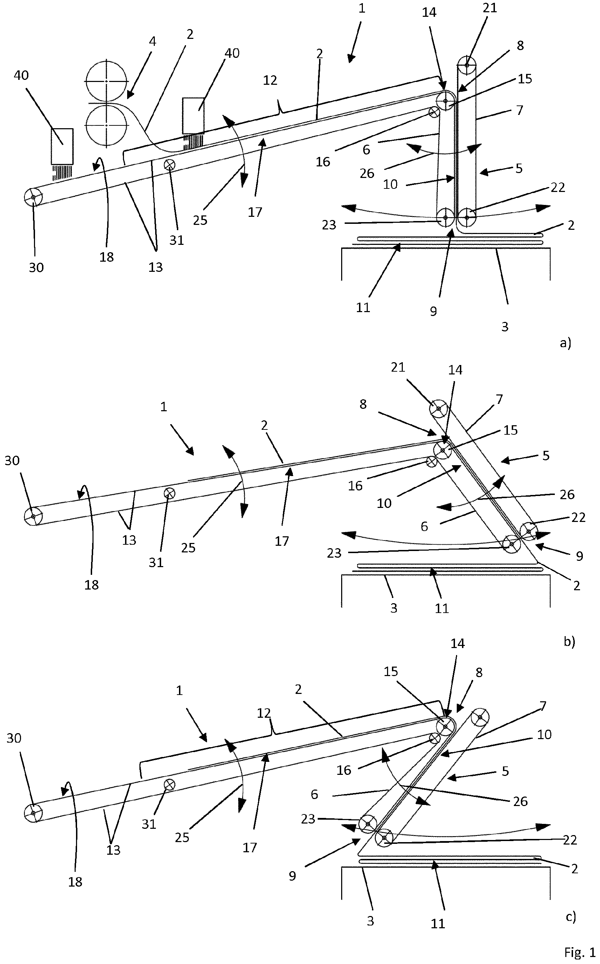

- Fig. 1: eine Vorrichtung zum kontinuierlichen gefalteten Ablegen von Teig in drei Schwenkpositionen a, b, c der Ablegeeinrichtung;

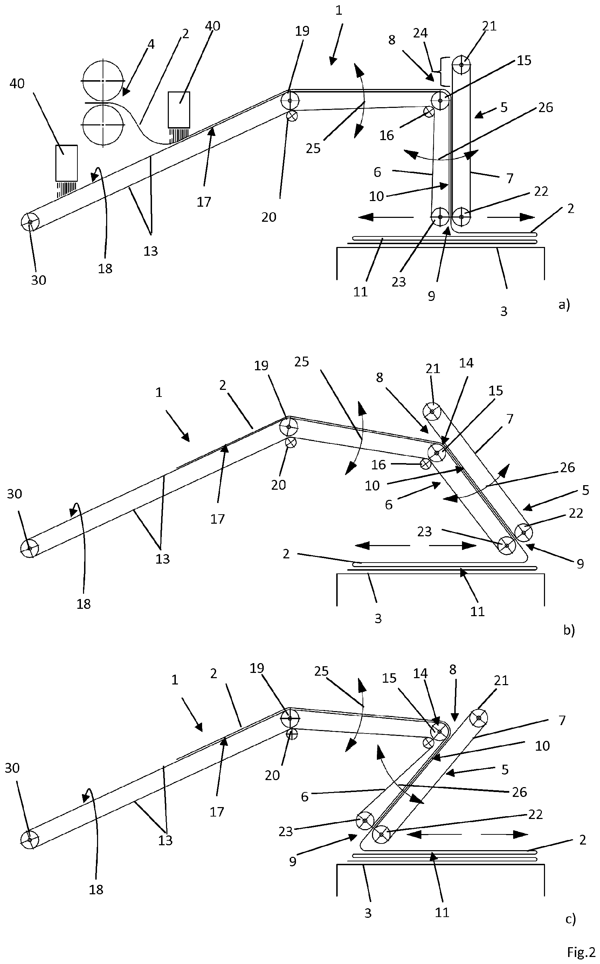

- Fig. 2: eine modifizierte Ausführungsform der Vorrichtung entsprechend Fig. 1, bei welcher das Zuführförderband in einem mittleren Bereich über ein weiteres Rollenpaar und das stromabwärtige Ende der Ablegeeinheit äquidistant über dem Abführförderband geführt ist;

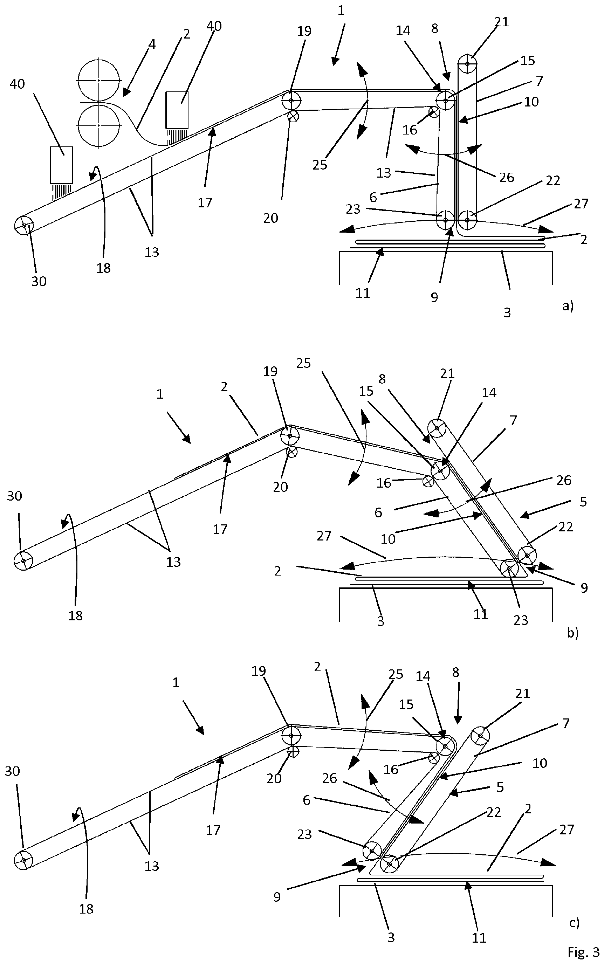

- Fig. 3: eine Vorrichtung gemäß Fig.2, bei welcher das stromabwärtige Ende in einem konvexen, d. h. nach oben gewölbten Bogen, über dem Abführförderband geführt ist;

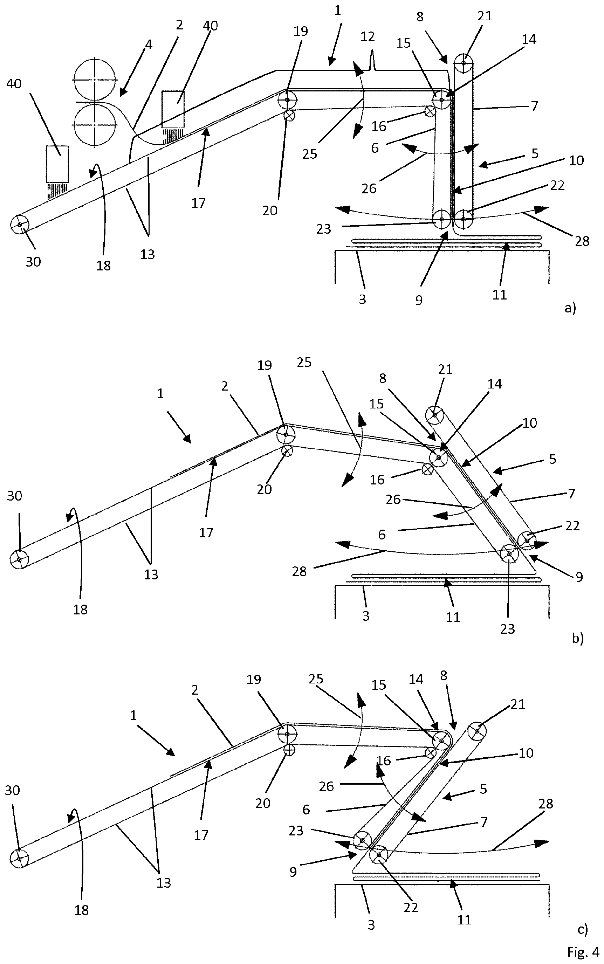

- Fig. 4: eine Vorrichtung gemäß Fig. 2 und 3, bei welcher das stromabwärtige Ende der Ablegeeinrichtung in einem konkaven, d. h. nach unten gewölbten, Bogen über dem Abführförderband geführt ist.

Die in den Zeichnungsfiguren dargestellte Vorrichtung 1 bzw. Faltanlage zum kontinuierlichen gefalteten Ablegen von Teig 2 auf einem Fördermittel 3 umfasst eine Teigzuführeinrichtung 4 zum Zuführen des Teiges 2 aus einem nicht näher dargestellten Teigvorrat zu einer Ablegeeinrichtung 5. Die Ablegeeinrichtung 5 weist ein paar voneinander beabstandeter Förderbänder 6, 7 auf, wobei die Ablegeeinrichtung 5 an ihrem oberen Ende 8 verschwenkbar gelagert ist und an ihrem unteren Ende hin- und herbewegbar angetrieben wird.

Eine in dem Spalt 10 zwischen den beiden Förderbändern 6 und 7 der Ablegeeinrichtung 5 nach unten bewegte Teigbahn kann durch die pendelnde Hin- und Herbewegung der Ablegeeinrichtung 5 in Lagen 11 übereinander auf dem Fördermittel 3 abgelegt werden. Die Zuführeinrichtung 4 setzt den als Band vorgeformten Teig 2 auf einem Förderbandabschnitt 12 ab, der stromaufwärts vom Spalt 10 der Ablegeeinrichtung 5 angeordnet ist bzw. verläuft.

Der oberhalb des Spaltes 10 angeordnete bzw. verlaufende Förderbandabschnitt 12 und das Förderband 6 der Ablegeeinrichtung 5 werden durch ein gemeinsames, durchgehendes Förderband gebildet, das insgesamt mit 13 bezeichnet ist. Bei dem Förderband 6 der Ablegeeinrichtung 5 handelt es sich sonach um einen bestimmten Förderbandabschnitt des gemeinsamen durchgehenden Förderbands 13.

Das gemeinsame durchgehende Förderband 13 wird im Schwenklagerbereich 14 der Ablegeeinrichtung 5 über zwei benachbarte Rollen 15, 16 derart geführt, dass eine erste Rolle 15 die Unterseite 17 des Förderbandes 13 und eine zweite, bezüglich ihrer jeweiligen Rollenmittelachsen parallele Rolle 16 die Oberseite 18 des von der Ablegeeinrichtung 5 zurücklaufenden gemeinsamen durchgehenden Förderbandes 13 von unten beaufschlagt.

Stromaufwärts vom Schwenklagerbereich 14 der Ablegeeinrichtung 5 ist bei dem in Zeichnungsfiguren 2, 3 und 4 dargestellten Ausführungsbeispiel ein weiteres Rollenpaar angeordnet, wobei eine erste Rolle 19 dieses Rollenpaares das gemeinsame durchgehende Förderband 13 auf seiner Unterseite und eine zweite zur ersten Rolle 19 bezüglich ihrer jeweiligen Rollenmittelachsen parallele Rolle 20 an seiner Oberseite 18 von unten beaufschlagt.

Der Abstand der Rollen 15, 16 im Schwenklagerbereich 14 der Ablegeeinrichtung 5 und stromaufwärts vom Schwenklagerbereich 14 der Ablegeeinrichtung 5 ist voneinander derart gewählt, dass der auf der auf der Oberseite 18 beaufschlagte Abschnitt des gemeinsamen durchgehenden Förderbandes 13 durch einen schmalen Spalt zwischen den beiden Rollen 15, 16 bzw. 19, 20 hindurchgeführt werden kann.

Das stromabwärtige untere Ende 9 der Ablegeeinrichtung 5 wird im Wesentlichen äquidistant über dem Fördermittel 3 verschwenkbar gelagert, so wie dies in Zeichnungsfigur 2 angedeutet ist. In Sonderfällen kann es aber auch sinnvoll sein, von einer Äquidistanz zwischen dem unteren Ende 9 der Ablegeeinrichtung 5 und dem Fördermittel 3 abzusehen und eine konvexe Führung vorzusehen, wie diese beispielsweise in Zeichnungsfigur 3 dargestellt ist (vgl. Pfeil 27), oder eine konkave Führung vorzusehen, wie diese beispielsweise in Zeichnungsfigur 4 angedeutet ist (vgl. Pfeil 28).

Das Fördermittel 3 ist in an sich bekannter Weise ein Abführförderband, das im Wesentlichen rechtwinkelig zur Schwenkrichtung der Ablegeeinrichtung 5 angetrieben ist und den wie durch die horizontal ausgerichteten, nicht näher bezeichneten Pfeile zick-zack-artig aufgelegten Teig 2 aus der Zeichnungsebene heraus zu einer nächsten Bearbeitungsstation fördert.

Das Förderband 7 der Ablegeeinrichtung 5 ist am oberen Ende 8 der Ablegeeinrichtung 5 derart angeordnet, dass über das gemeinsame durchgehende Förderband 13 zum Spalt 10 geförderter Teig 2 gegen einen nach oben überstehenden Abschnitt 24 des Förderbandes 7 geführt wird. Der Abstand der Rollen 21, 22 des Förderbandes 7 ist dabei größer bemessen als der Abstand der am stromabwärtigen Ende der Ablegeeinrichtung 5 angeordneten Rolle 23 von der im Schwenklagerbereich 14 angeordneten Rolle 15 des gemeinsamen durchgehenden Förderbandes 13. Das Schwenklager der Ablegeeinrichtung 5 ist insgesamt höhenverlagerbar angeordnet, sodass das untere Ende 9 der Ablegeeinrichtung 5 wie in den Zeichnungsfiguren 1 - 4 gezeigt, geführt werden kann. Durch die Pfeile 25, 26 in den Zeichnungsfiguren ist angedeutet, wie die jeweiligen Schwenkbewegungen der jeweiligen Förderbandabschnitte verlaufen.

In Zeichnungsfigur 1 ist ferner ein einen Dreh- bzw. Schwenkpunkt für die Vorrichtung 1 relativ zu dem oder einem Fördermittel 3 bildendes Dreh- bzw. Schwenkelement 31 gezeigt. Das Dreh- bzw. Schwenkelement 31 bildet zusätzlich zu dem Schwenklagerbereich 14 der Ablegeeinrichtung 5 einen weiteren Dreh- bzw. Schwenklagerbereich. Bei dem Dreh- bzw. Schwenkelement 31 handelt es sich um ein Dreh- bzw. Schwenklager. Die Vorrichtung 1 ist um den durch das Dreh- bzw. Schwenkelement 31 gebildeten Dreh- bzw. Schwenkpunkt relativ zu dem oder einem Fördermittel 3 dreh- bzw. schwenkbar gelagert (vgl. Pfeil 25). Derart ist auf konstruktiv vergleichsweise einfache Weise eine Dreh- bzw. Schwenkbarkeit der gesamten Vorrichtung 1, d. h. insbesondere der Teigzuführeinrichtung 4, der Förderbandabschnitte des gemeinsamen durchgehenden Förderbands 13 sowie der Ablegeeinrichtung 5, relativ zu dem Fördermittel 3 realisiert.

Ersichtlich ist das den Dreh- bzw. Schwenkpunkt bildende Dreh- bzw. Schwenkelement 31 stromaufwärts von dem Schwenklagerbereich 14 der Ablegeeinrichtung 5, nämlich in einem Bereich des gemeinsamen durchgehenden Förderbandes 13, in welchem der Teig 2 von der Teigzuführeinrichtung 4 auf das gemeinsame durchgehende Förderband 13 aufgelegt wird, angeordnet. Die Zuführung des Teiges2 auf das gemeinsame durchgehende Förderband 13 erfolgt sonach zwischen dem einen Dreh- bzw. Schwenkpunkt für die Vorrichtung 1 bildenden Dreh- bzw. Schwenkelement 31 und einem stromaufwärts nachfolgenden Rollenpaar. Durch diese Anordnung des Dreh- bzw. Schwenkelements 31 können z. B. durch Höhenverlagerungen des auf das gemeinsame durchgehende Förderband 13 aufgelegten Teiges 2 bedingte "Beunruhigungen" des Teiges 2 reduziert bzw. vermieden und die Förderung des Teiges 2 sonach beruhigt werden. Vorrichtungsseitig kann zudem auf weitere mit dem gemeinsamen durchgehenden Förderband 13, z. B. zum Zwecke einer bestimmten Umlenkung, Wölbung etc., eines Förderbandabschnitts, zusammenwirkende Umlenkrollen verzichtet werden, was sich positiv auf die Laufeigenschaften bzw. das Laufverhalten des gemeinsamen durchgehenden Förderbands 13 auswirkt.

Die in den Zeichnungsfiguren 2 - 4 dargestellten Ausführungsformen sind insoweit etwas vorteilhafter als die in Zeichnungsfigur 1 dargestellte Ausführungsform, weil die Auf- und Abbewegung des Schwenklagerbereiches 14 bei der in Zeichnungsfigur 1 dargestellten Ausführungsform dazu führen kann, dass der Förderbandabschnitt 12 des gemeinsamen durchgehenden Förderbandes 13, auf dem der Teig 2 abgelegt wird, eine Nickbewegung durchführt, wohingegen der Förderbandabschnitt 12 des gemeinsamen durchgehenden Förderbandes 13 stromabwärts von der Rolle 19, auf dem der Teig 2 abgelegt wird, völlig beruhigt ist.

In den Zeichnungsfiguren sind noch Mehler 40 dargestellt, die einerseits zur Bemehlung, allgemein der Aufbringung eines Trennmittels, (auf) der Oberseite 18 des gemeinsamen durchgehenden Förderbandes 13 bzw. zur Oberseite des auf dem gemeinsamen durchgehenden Förderband 13 abgelegten Teiges 2 dienen.

Anhand der Zeichnungsfiguren ist ersichtlich, dass die Vorrichtung 1 lediglich zwei Förderbänder, nämlich ein als "gemeinsames durchgehendes Förderband 13" bezeichnetes erstes Förderband und das zweite Förderband 7 (der Ablegeeinrichtung 5) umfasst. Die Ablegeeinrichtung 5 ist durch zwei Förderbänder 13, 7 bzw. zwei Förderbandabschnitte in paralleler Anordnung gebildet, zwischen welchen sich der Spalt 10 erstreckt. Neben dem zweiten Förderband 7 bildet das erste Förderband dabei mit einem Förderbandabschnitt (vgl. Förderband 6) gleichermaßen ein Förderband bzw. einen Förderbandabschnitt der Ablegeeinrichtung 5.

Allgemein ist zu den Zeichnungsfiguren noch zu erwähnen, dass wenngleich die Teigzuführeinrichtung 4 sowie die Mehler 40, nur in den Zeichnungsfiguren 1a, 2a, 3a, 4a dargestellt sind, diese selbstverständlich auch bei den Vorrichtungen 1 gemäß den Zeichnungsfiguren 1b, 1c, 2b, 2c, 3b, 3c, 4b, 4c vorhanden sind.

### BEZUGSZEICHENLISTE

- 1: Vorrichtung
- 2: Teig
- 3: Fördermittel
- 4: Teigzuführeinrichtung
- 5: Ablegeeinrichtung
- 6: Förderband
- 7: Förderband
- 8: oberes Ende der Ablegeeinrichtung
- 9: unteres Ende der Ablegeeinrichtung
- 10: Spalt
- 11: Lagen
- 12: Förderbandabschnitt
- 13: gemeinsames durchgehendes Förderband
- 14: Schwenklagerbereich
- 15: Rolle
- 16: Rolle
- 17: Unterseite
- 18: Oberseite
- 19: Rolle
- 20: Rolle
- 21: Rolle
- 22: Rolle
- 23: Rolle
- 24: überstehender Abschnitt
- 25: Pfeil
- 26: Pfeil
- 27: Pfeil
- 28: Pfeil

- 30: Rolle
- 31: Dreh- bzw. Schwenkelement

- 40: Mehler

## Patentansprüche

1. Vorrichtung (1) zum kontinuierlichen gefalteten Ablegen von Teig (2) auf einem Fördermittel (3), mit einer Teigzuführeinrichtung (4) zum Zuführen des Teiges (2) aus einem Teigvorrat zu einer Ablegeeinrichtung (5), wobei die Ablegeeinrichtung (5) ein Paar voneinander beabstandeter Förderbänder zum Befördern des Teiges (2) aufweist, das an seinem oberen Ende (8) verschwenkbar gelagert ist und an seinem unteren Ende (9) hin- und herbewegbar angetrieben ist derart, dass eine im Spalt (10) zwischen den Förderbändern (6, 7) nach unten bewegte Teigbahn in Lagen (11) übereinander auf dem Fördermittel (3) ablegbar ist und wobei die Teigzuführeinrichtung (4) den Teig (2) auf einem Förderbandabschnitt (12) ablegt, der stromaufwärts vom Spalt (10) der Ablegeeinrichtung (5) angeordnet ist, wobei der oberhalb des Spaltes (10) angeordnete Förderbandabschnitt (12) und eines der Förderbänder (6) der Ablegeeinrichtung (5) durch ein gemeinsames durchgehendes Förderband (13) gebildet werden und das gemeinsame durchgehende Förderband (13) in einem Schwenklagerbereich (14) der Ablegeeinrichtung (5) über zwei benachbarte Rollen (15, 16) derart geführt ist, dass eine erste Rolle die Unterseite (17) des Förderbandes (13) und eine zweite, insbesondere parallele, Rolle (16) die Oberseite (18) des Förderbandes (13) von unten beaufschlagt, **gekennzeichnet durch** ein einen Dreh- bzw. Schwenkpunkt für die Vorrichtung (1) relativ zu dem oder einem Fördermittel (3) bildendes Dreh- bzw. Schwenkelement (31), wobei die Vorrichtung (1) um den durch das Dreh- bzw. Schwenkelement (31) gebildeten Dreh- bzw. Schwenkpunkt relativ zu dem oder einem Fördermittel (3) dreh- bzw. schwenkbar gelagert ist, wobei das Dreh- bzw. Schwenkelement (31) stromaufwärts, in einem Bereich des gemeinsamen durchgehenden Förderbandes (13), in welchem Teig (2) von der Teigzuführeinrichtung (4) auf das gemeinsame durchgehende Förderbandes (13) aufgelegt wird, von dem oder einem Schwenklagerbereich (14) der Ablegeeinrichtung (5) angeordnet ist, sowie im Bereich des unteren Endes (9) der Ablegeeinrichtung (5) Horizontalführungsmittel angeordnet sind.

2. Vorrichtung (1) nach Anspruch 1, **dadurch gekennzeichnet, dass** stromaufwärts von dem oder einem Schwenklagerbereich (14) der Ablegeeinrichtung (5) ein weiteres Rollenpaar (19, 20) angeordnet ist, wobei eine erste Rolle (19) dieses Rollenpaares das gemeinsame Förderband (13) auf seiner Unterseite (17) und eine zweite, insbesondere parallele, Rolle (20) das gemeinsame Förderband (13) an seiner Oberseite (18) beaufschlagt.

3. Vorrichtung (1) nach einem der vorhergehenden Ansprüche 1 oder 2, **dadurch gekennzeichnet, dass** der Abstand der Rollen (15, 16) in dem Schwenklagerbereich (14) der Ablegeeinrichtung (5) und stromaufwärts von dem Schwenklagerbereich (14) der Ablegeeinrichtung (5) derart gewählt ist, dass der auf der Oberseite (18) beaufschlagte Abschnitt des Förderbandes (13) durch einen Spalt zwischen den beiden Rollen (15, 16, 19, 20) eines jeden Rollenpaares hindurchführbar ist.

4. Vorrichtung (1) nach einem der vorhergehenden Ansprüche, **dadurch gekennzeichnet, dass** das untere Ende (9) der Ablegeeinrichtung (5) im Wesentlichen äquidistant über dem Fördermittel (3) hin- und her schwenkbar gelagert ist.

5. Vorrichtung (1) nach einem der vorhergehenden Ansprüche, **dadurch gekennzeichnet, dass** das Fördermittel (3) ein Abführförderband ist, das in an sich bekannter Weise im Wesentlichen rechtwinklig zur Schwenkrichtung der Ablegeeinrichtung (5) angetrieben ist.

6. Vorrichtung (1) nach einem der vorhergehenden Ansprüche, **dadurch gekennzeichnet, dass** das andere Förderband (7) der Ablegeeinrichtung (5) derart angeordnet ist, dass über das gemeinsame durchgehende Förderband (13) zu einem Einlaufende des Spaltes (10) geförderter Teig (2) gegen einen nach oben überstehenden Abschnitt (24) des anderen Förderbandes (7) geführt wird.

7. Vorrichtung (1) nach Anspruch 6, **dadurch gekennzeichnet, dass** der gegenseitige Abstand der Rollen (21, 22) des anderen Förderbandes (7) größer ist als der Abstand der am stromabwärtigen Ende der Ablegeeinrichtung (5) angeordneten Rolle (23) von der im Schwenklagerbereich (14) der Ablegeeinrichtung (5) angeordneten Rolle (15) des gemeinsamen durchgehenden Förderbandes (13).

8. Vorrichtung (1) nach einem der vorhergehenden Ansprüche, **dadurch gekennzeichnet, dass** das Schwenklager der Ablegeeinrichtung (5) höhenverlagerbar angeordnet ist.

9. Vorrichtung (1) nach einem der vorhergehenden Ansprüche, **dadurch gekennzeichnet, dass** die stromaufwärtige Rolle (21) des anderen Förderbandes (7) der Ablegeeinrichtung (5) auf einer Kreisbahn um die Schwenkachse der Ablegeeinrichtung (5) geführt ist.

10. Vorrichtung (1) nach einem der vorhergehenden Ansprüche, **dadurch gekennzeichnet, dass** bei vertikal angeordnetem Spalt (10) der Ablegeeinrichtung (5) der auf dem gemeinsamen durchgehenden Förderband (13) dem stromaufwärtigen Ende des Spaltes (10) zugeführte Teig (2) im Wesentlichen rechtwinklig auf das andere Förderband (7) trifft.

11. Vorrichtung (1) nach einem der vorhergehenden Ansprüche, **dadurch gekennzeichnet, dass** das gemeinsame durchgehende Förderband (13) an seinem stromaufwärtigen Ende über eine weitere Rolle (30) geführt ist und die Zuführung des Teiges (2) aus der Teigzuführeinrichtung (4) zwischen der am stromaufwärtigen Ende angeordneten Rolle (30) und dem stromaufwärts nachfolgenden Rollenpaar (14, 15 bzw. 19, 20) erfolgt.

12. Vorrichtung (1) nach einem der vorhergehenden Ansprüche, **dadurch gekennzeichnet, dass** die Teigzuführvorrichtung (4) als Teigbandformer ausgebildet ist.

13. Vorrichtung (1) nach einem der vorhergehenden Ansprüche, **dadurch gekennzeichnet, dass** ein stromaufwärts angeordneter Abschnitt des gemeinsamen Förderbandes (13) vor dem Zuführabschnitt des Teiges (2) in den Spalt (10) mit Trennmitteln beaufschlagbar ist.

14. Vorrichtung (1) nach einem der vorhergehenden Ansprüche, **dadurch gekennzeichnet, dass** der auf dem gemeinsamen Förderband (13) laufende Teig (2) auf seiner Oberfläche mit Trennmitteln beaufschlagbar ist.

## Claims

1. A device (1) for continuously folded deposition of dough (2) on a conveyor (3), comprising a dough supply device (4) for supplying the dough (2) from a dough supply to a depositing device (5), wherein the depositing device (5) comprises a pair of spaced apart conveyor belts for conveying the dough (2), which is pivotably mounted at its upper end (8) and is driven in a reciprocating manner at its lower end (9) in such a way that a dough path moved downwards in the gap (10) between the conveyor belts (6, 7) can be deposited in layers (11) one above the other on the conveying means (3), and the dough feed device (4) depositing the dough (2) on a conveyor belt section (12), which is arranged upstream of the gap (10) of the depositing device (5), wherein the conveyor belt section (12) arranged above the gap (10) and one of the conveyor belts (6) of the depositing device (5) are formed by a common continuous conveyor belt (13) and the common continuous conveyor belt (13) is arranged in a pivot bearing region (14) of the depositing device (5) via two adjacent rollers (15), 16) is guided in such a way that a first roller acts on the underside (17) of the conveyor belt (13) and a second, in particular parallel, roller (16) acts on the upper side (18) of the conveyor belt (13) from below, **characterised by** a rotating or pivot point for the device (1) relative to the or a conveying means (3), wherein the device (1) is mounted so as to be rotatable or pivotable relative to the or a conveying means (3) about the pivot point formed by the pivot or pivot element (31), wherein the pivot or pivot element (31) is mounted so as to be rotatable or pivotable relative to the or a conveying means (3), wherein the pivot or pivot element (31) is mounted so as to be rotatable or pivotable about the pivot or pivot point formed by the pivot or pivot element (31) is arranged upstream, in a region of the common continuous conveyor belt (13), in which dough (2) is placed by the dough supply device (4) on the common continuous conveyor belt (13), from the or a pivot bearing region (14) of the depositing device (5), and horizontal guide means are arranged in the region of the lower end (9) of the depositing device (5).

2. A device (1) according to claim 1, **characterised in that** a further pair of rollers (19, 20) is arranged upstream of the or a pivot bearing region (14) of the depositing device (5), a first roller (19) of this pair of rollers acting on the common conveyor belt (13) on its underside (17) and a second, in particular parallel, roller (20) acting on the common conveyor belt (13) on its upper side (18).

3. A device (1) according to one of the preceding claims 1 or 2, **characterised in that** the distance between the rollers (15, 16) in the pivot bearing region (14) of the depositing device (5) and upstream of the pivot bearing region (14) of the depositing device (5) is selected in such a way that the section of the conveyor belt (13) acted upon on the upper side (18) can be passed through a gap between the two rollers (15, 16, 19, 20) of each pair of rollers.

4. A device (1) according to one of the preceding claims, **characterised in that** the lower end (9) of the depositing device (5) is mounted so as to be pivotable back and forth substantially equidistantly above the conveying means (3).

5. A device (1) according to one of the preceding claims, **characterised in that** the conveying means (3) is a discharge conveyor belt which is driven in a manner known per se substantially at right angles to the direction of pivoting of the depositing device (5).

6. A device (1) according to one of the preceding claims, **characterised in that** the other conveyor belt (7) of the depositing device (5) is arranged in such a way that dough (2) conveyed to an inlet end of the gap (10) via the common continuous conveyor belt (13) is guided against an upwardly projecting section (24) of the other conveyor belt (7).

7. A device (1) according to claim 6, **characterised in that** the mutual distance between the rollers (21, 22) of the other conveyor belt (7) is greater than the distance between the roller (23) arranged at the downstream end of the depositing device (5) and the roller (15) of the common continuous conveyor belt (13) arranged in the pivot bearing region (14) of the depositing device (5).

8. A device (1) according to one of the preceding claims, **characterised in that** the pivot bearing of the depositing device (5) is arranged to be vertically displaceable.

9. A device (1) according to one of the preceding claims, **characterised in that** the upstream roller (21) of the other conveyor belt (7) of the depositing device (5) is guided on a circular path around the pivot axis of the depositing device (5).

10. A device (1) according to one of the preceding claims, **characterised in that**, with the gap (10) of the depositing device (5) arranged vertically, the dough (2) fed on the common continuous conveyor belt (13) to the upstream end of the gap (10) meets the other conveyor belt (7) substantially at right angles.

11. A device (1) according to one of the preceding claims, **characterised in that** the common continuous conveyor belt (13) is guided at its upstream end over a further roller (30) and the dough (2) is fed from the dough feeding device (4) between the roller (30) arranged at the upstream end and the pair of rollers (14, 15 or 19, 20) following upstream.

12. A device (1) according to one of the preceding claims, **characterised in that** the dough feeding device (4) is designed as a dough band former.

13. A device (1) according to one of the preceding claims, **characterised in that** an upstream section of the common conveyor belt (13) can be acted upon by separating means before the feed section of the dough (2) into the gap (10).

14. A device (1) according to one of the preceding claims, **characterised in that** the dough (2) running on the common conveyor belt (13) can be acted upon on its surface by separating means.

## Revendications

1. Dispositif (1) de dépôt continu de pâte repliée (2) sur un moyen de transport (3), comprenant un dispositif d'alimentation de pâte (4) pour amener la pâte (2) d'une alimentation en pâte à un dispositif de dépôt (5), dans lequel le dispositif de dépôt (5) comprend une paire de courroies transporteuses espacées l'une de l'autre pour transporter la pâte (2), qui est monté de manière pivotante à son extrémité supérieure (8) et est entraîné en va-et-vient à son extrémité inférieure (9) de telle sorte qu'un chemin de pâte se déplace vers le bas dans l'espace (10) entre les bandes transporteuses (6, 7) peuvent être déposés en couches (11) les unes sur les autres sur le moyen de transport (3), et le dispositif d'alimentation de pâte (4) déposant la pâte (2) sur une section de bande transporteuse (12), qui est disposée en amont de l'interstice (10) du dispositif de dépôt (5), dans lequel le tronçon de bande transporteuse (12) dtrisposé au-dessus de la fente (10) et l'une des bandes transporteuses (6) du dispositif de dépôt (5) sont formés par une bande transporteuse continue commune (13) et la bande transporteuse continue commune (13) est disposée dans une zone de palier pivotant (14) du dispositif de dépôt (5) par l'intermédiaire de deux rouleaux (15) adjacents, 16) est guidé de telle sorte qu'un premier rouleau agit sur la face inférieure (17) de la bande transporteuse (13) et un second rouleau (16), notamment parallèle, agit sur la face supérieure (18) de la bande transporteuse (13) par le bas, **caractérisé par** un point de rotation ou de pivotement du dispositif (1) par rapport au ou à un moyen de transport (3), dans lequel le dispositif (1) est monté de manière à pouvoir tourner ou pivoter par rapport au ou à un moyen de transport (3) autour du point de pivotement formé par le pivot ou l'élément de pivot (31), dans lequel le pivot ou l'élément de pivot (31) est monté de manière à pouvoir tourner ou pivoter par rapport au ou à un moyen de transport (3), dans lequel le pivot ou l'élément de pivotement (31) est monté de manière à pouvoir tourner ou pivoter autour du point de pivotement formé par le pivot ou l'élément de pivotement (31) est disposé en amont, dans une zone de la bande transporteuse continue commune (13), dans laquelle de la pâte (2) est déposée par le dispositif d'alimentation de pâte (4) sur la bande transporteuse continue commune (13), de la ou d'une zone de palier de pivotement (14) du dispositif de dépôt (5), et des moyens de guidage horizontal sont disposés dans la zone de l'extrémité inférieure (9) du dispositif de dépôt (5).

2. Dispositif (1) selon la revendication 1, **caractérisé en ce qu'**une autre paire de rouleaux (19, 20) est disposée en amont de la ou d'une zone de palier pivotant (14) du dispositif de dépôt (5), un premier rouleau (19) de cette paire de rouleaux agissant sur la bande transporteuse commune (13) sur sa face inférieure (17) et un second rouleau (20), en particulier parallèle, agissant sur la bande transporteuse commune (13) sur sa face supérieure (18).

3. Dispositif (1) selon l'une des revendications 1 ou 2 précédentes, **caractérisé en ce que** l'écartement entre les rouleaux (15, 16) dans la zone de palier de pivotement (14) du dispositif de dépôt (5) et en amont de la zone de palier de pivotement (14) du dispositif de dépôt (5) est choisi de telle sorte que la section de la bande transporteuse (13) sollicitée sur la face supérieure (18) puisse être passée à travers un interstice entre les deux rouleaux (15, 16, 19, 20) de chaque paire de rouleaux.

4. Dispositif (1) selon l'une des revendications précédentes, **caractérisé en ce que** l'extrémité inférieure (9) du dispositif de dépôt (5) est montée de manière à pouvoir pivoter en va-et-vient à une distance sensiblement égale au-dessus du moyen de transport (3).

5. Dispositif (1) selon l'une des revendications précédentes, **caractérisé en ce que** le moyen de transport (3) est une bande transporteuse d'évacuation qui est entraînée d'une manière connue en soi sensiblement à angle droit par rapport à la direction de pivotement du dispositif de dépôt (5).

6. Dispositif (1) selon l'une des revendications précédentes, **caractérisé en ce que** l'autre bande transporteuse (7) du dispositif de dépôt (5) est disposée de telle sorte que la pâte (2) transportée à une extrémité d'entrée de la fente (10) par l'intermédiaire de la bande transporteuse continue commune (13) est guidée contre une section (24) de l'autre bande transporteuse (7) qui fait saillie vers le haut.

7. Dispositif (1) selon la revendication 6, **caractérisé en ce que** la distance mutuelle entre les rouleaux (21, 22) de l'autre bande transporteuse (7) est supérieure à la distance entre le rouleau (23) disposé à l'extrémité aval du dispositif de dépôt (5) et le rouleau (15) de la bande transporteuse continue commune (13) disposé dans la zone de palier pivotant (14) du dispositif de dépôt (5).

8. Dispositif (1) selon l'une des revendications précédentes, **caractérisé en ce que** le palier de pivotement du dispositif de dépôt (5) est disposé de manière à pouvoir être déplacé verticalement.

9. Dispositif (1) selon l'une des revendications précédentes, **caractérisé en ce que** le rouleau amont (21) de l'autre bande transporteuse (7) du dispositif de dépôt (5) est guidé sur une trajectoire circulaire autour de l'axe de pivotement du dispositif de dépôt (5).

10. Dispositif (1) selon l'une des revendications précédentes, **caractérisé en ce que**, l'interstice (10) du dispositif de dépôt (5) étant disposé verticalement, la pâte (2) amenée sur la bande transporteuse (13) continue commune à l'extrémité amont de l'interstice (10) rencontre l'autre bande transporteuse (7) sensiblement à angle droit.

11. Dispositif (1) selon l'une des revendications précédentes, **caractérisé en ce que** la bande transporteuse continue commune (13) est guidée à son extrémité amont sur un autre rouleau (30) et la pâte (2) est amenée à partir du dispositif d'alimentation de pâte (4) entre le rouleau (30) disposé à l'extrémité amont et la paire de rouleaux (14, 15 ou 19, 20) suivant en amont.

12. Dispositif (1) selon l'une des revendications précédentes, **caractérisé en ce que** le dispositif d'alimentation de pâte (4) est conçu comme une formeuse de bande de pâte.

13. Dispositif (1) selon l'une des revendications précédentes, **caractérisé en ce qu'**une section amont de la bande transporteuse commune (13) peut être sollicitée par des moyens de séparation avant la section d'alimentation de la pâte (2) dans la fente (10).

14. Dispositif (1) selon l'une des revendications précédentes, **caractérisé en ce que** la pâte (2) circulant sur la bande transporteuse commune (13) peut être traitée sur sa surface par des moyens de séparation.
